# FASCICULE DE BREVET EUROPEEN

(11) **EP 0 965 733 B1**
(45) Date de publication et mention de la délivrance du brevet: **16.04.2003**
(21) Numéro de dépôt: 99401439.7
(22) Date de dépôt: 11.06.1999
(51) Int. Cl.: F01L 9/04, F02D 33/02, F02D 41/34

(54) **Système de commande d'actionneurs électriques de soupapes d'un moteur à distribution variable**
Elektronische Ventilsteuerung einer Brennkraftmaschine mit variabler Ventilsteuerung
Electric valve actuator system for an engine with variable valve timing

(30) Priorité: 17.06.1998 FR 9807650
(43) Date de publication de la demande: 22.12.1999
(73) Titulaire: AUTOMOBILES PEUGEOT, 75116 Paris (FR); AUTOMOBILES CITROEN, 92200 Neuilly-sur-Seine (FR)
(72) Inventeur: Corde, Gilles, 92370 Chaville (FR)
(74) Mandataire: Habasque, Etienne Joel Jean-François

(56) Documents cités:
- EP-A- 0 769 613
- US-A- 5 115 782

## Description

La présente invention concerne un système de commande d'actionneurs électriques de soupapes d'un moteur à distribution variable notamment de véhicule automobile.

De tels moteurs comportent des soupapes d'admission et/ou des soupapes d'échappement qui sont pilotées par des actionneurs électromécaniques.

Ce type de moteur dispose donc de nombreux degrés de liberté, rendant de ce fait nettement plus complexe sa commande associée.

Jusqu'à présent deux points principaux ont limité le développement de ces moteurs.

Le premier point concerne la technologie même des actionneurs qui est aujourd'hui relativement fiable et peut donc être appliquée en grande série.

Le deuxième point concerne le système de commande et de contrôle des actionneurs. En effet, ce type de moteur nécessite des moyens électroniques relativement complexes qui ne sont devenus disponibles que depuis quelques années, car seul un pilotage optimal des actionneurs permet d'exploiter au mieux le potentiel complet du moteur.

Ce rôle revient aux moyens de contrôle du moteur dont la structure en est complètement modifiée, car ils doivent prendre en compte pour un moteur à distribution variable, un grand nombre de variables de commande.

En effet, l'apport en air n'est plus assuré par un papillon au niveau d'un répartiteur d'admission, mais chacune des soupapes d'admission et d'échappement de chaque cylindre du moteur est pilotée indépendamment des autres.

Ainsi, pour un moteur de ce type à quatre cylindres et seize soupapes, le système de contrôle du moteur doit gérer seize variables de commande contre une seule pour un moteur traditionnel.

Un système de contrôle de moteur classique s'appuie de façon générale sur un contrôle par cartographies de commande, c'est-à-dire des tables de points de fonctionnement dont les entrées sont des grandeurs mesurées, telles que par exemple le régime moteur, la pression collecteur, etc..., et les sorties représentent la commande de l'actionneur à piloter, c'est-à-dire par exemple les injecteurs, l'angle papillon, etc...

Dans le cas d'un moteur à distribution variable avec seize entrées d'air à piloter, l'établissement de telles cartographies est impossible pour deux raisons principales, à savoir d'une part, leur dimension en termes d'entrée/sortie bien trop importante, car elles devraient comporter plus de quatre entrées et huit sorties (les angles d'ouverture et de fermeture des soupapes), et d'autre part, la commande des actionneurs, représentant l'inverse du processus à piloter, qui ne peut pas être construite directement par cartographies, le processus n'étant pas directement réversible.

Ainsi, un système de contrôle de moteur utilisant des cartographies ne peut pas rendre compte du fonctionnement complet d'un moteur à distribution variable.

Le but de l'invention est donc de résoudre ces problèmes.

A cet effet, l'invention a pour objet un système de commande d'actionneurs électriques de soupapes d'un moteur à distribution variable notamment de véhicule automobile, caractérisé en ce qu'il comporte une unité centrale de traitement d'informations de pilotage des actionneurs, dans laquelle sont intégrées des entités logicielles réparties par groupes :
a) d'entités logicielles de véhicule recevant en entrée une consigne de pilotage du moteur et différentes informations relatives aux contraintes de fonctionnement du véhicule pour délivrer une consigne de couple,
b) d'entités logicielles de moteur recevant en entrée la consigne de couple et différentes informations relatives aux conditions de fonctionnement du moteur pour délivrer une consigne de travail instantané pour chaque cylindre du moteur,
c) d'entités logicielles de combustion, pour chaque cylindre du moteur, recevant en entrée la consigne de travail instantané et différentes informations relatives au fonctionnement du cylindre pour délivrer en sortie des informations de commande des actionneurs associés au cylindre correspondant,
d) d'entités logicielles d'énergie recevant en entrée les informations de commande des actionneurs pour contrôler le fonctionnement de ceux-ci, et
e) d'entités logicielles de commande des actionneurs recevant en entrée, les informations de commande correspondantes.

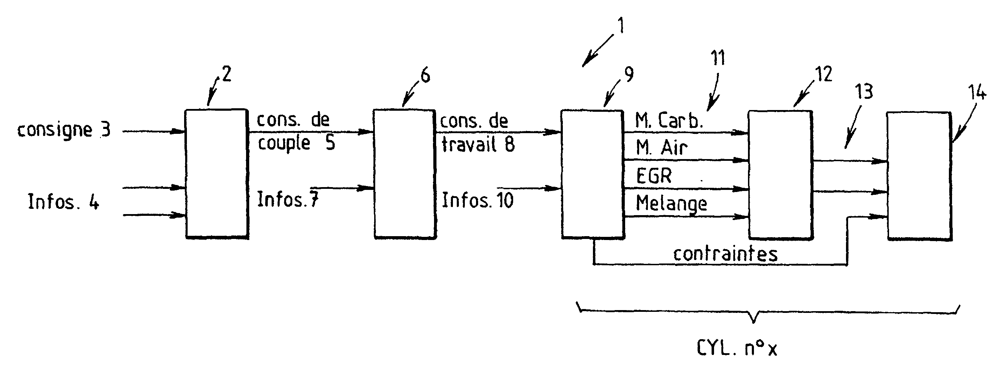

L'invention sera mieux comprise à l'aide de la description qui va suivre, donnée uniquement à titre d'exemple et faite en se référant au dessin annexé qui représente un schéma synoptique illustrant la structure générale d'un système de commande selon l'invention.

On a indiqué précédemment qu'une organisation logicielle classique d'un système de contrôle de moteur est inadéquate pour le pilotage d'un moteur à distribution variable.

En effet, chaque bloc fonctionnel de régulation ou d'asservissement est traité sur un même plan et souvent de manière concurrente vis-à-vis d'une autre régulation.

Face au grand nombre de variables à piloter pour un tel moteur, un découpage en blocs fonctionnels n'est donc plus suffisant.

La présente invention propose d'établir une hiérarchisation dans le pilotage du moteur.

L'objectif de ceci est double et consiste d'une part, à rendre indépendants les différents modules de commande et d'autre part, à réduire pour la plupart de ces modules, le nombre de variables de contrôle.

Le but principal du système de commande selon l'invention est d'assurer un pilotage optimal en couple pour chaque point de fonctionnement du moteur et d'intégrer efficacement l'agrément de conduite du véhicule ainsi que les contraintes portant sur la consommation et la dépollution.

Cette prise en compte est réalisée en modifiant la structure logicielle du système de contrôle de moteur et en imposant une hiérarchisation des différents blocs de commande.

Cette commande a donc pour objectif de piloter le moteur en temps que source de couple quasi-idéale en respectant dans tout son domaine de fonctionnement des contraintes dynamiques qui sont imposées par deux éléments, à savoir d'une part, l'élément conducteur/véhicule concernant les fonctions d'agréments de conduite, de confort, de dialogue avec les systèmes de freinage et de stabilité, etc.. et d'autre part, l'élément environnement concernant les contraintes portant sur la consommation et les émissions polluantes.

Ainsi, une décomposition en deux niveaux de commande est implicite. Cette décomposition se rapporte alors à un système pour la commande du véhicule qui permet d'introduire un typage dynamique du véhicule en fonction du conducteur et des contraintes environnementales. Les commandes à ce niveau sont complètement découplées du moteur et gèrent uniquement l'intégration du moteur au sein du véhicule.

Le moteur est donc uniquement modélisé comme une source de couple avec sa constante de temps caractéristique. Le résultat de toutes ces commandes est traduit en consigne de couple et ensuite transmis à un système pour la commande du moteur qui convertit cette consigne en commande d'actionneurs, en choisissant un optimum suivant la consommation et les émissions polluantes.

Le dosage en air dans le moteur ainsi que le calcul de l'avance à l'allumage se font donc automatiquement en fonction de cette consigne en couple pour chaque cylindre du moteur à chaque demi-tour.

Cette structure permet d'adapter le dosage en air en fonction de chaque point de fonctionnement et de préserver toujours le rendement de combustion optimal.

Chaque cylindre du moteur est donc gérer de façon complètement indépendante des autres cylindres et le couple moyen engendré par le moteur peut être réparti de n'importe quelle façon entre tous les cylindres de ce moteur.

Ainsi, pour chaque cylindre, deux choix en temps réel sont fait, à savoir d'une part, l'activation ou non du cylindre et d'autre part, la configuration des soupapes actives par cylindre.

Une telle commande permet une gestion complète du moteur en exploitant ses degrés de liberté. Il s'agit alors de permettre un découplage de commande de haut niveau, c'est-à-dire de commande de véhicule (typage, agrément de conduite, etc..) et de commande en couple du moteur (prise en compte dynamique des contraintes de pollution, consommation, etc). Ainsi les commandes de véhicule sont génériques et non plus spécifiques à un véhicule (véhicule + transmission + moteur).

Cette structure de commande permet également d'introduire un typage dynamique du véhicule, c'est-à-dire des caractéristiques d'agrément de conduite différentes, suivant la volonté du conducteur ou suivant le contexte environnemental.

Ces caractéristiques ne remettent pas en cause le fonctionnement nominal du moteur où la commande moteur assure la fourniture en couple suivant le critère d'optimisation fixé par le système véhicule.

Ainsi ce type de commande permet de réduire notablement la consommation en ayant une meilleure gestion de l'agrément de conduite.

On a représenté sur la figure annexée, la structure générale d'un système de commande d'actionneurs permettant de mettre en oeuvre un tel concept. Ce système de commande est en effet basé sur l'utilisation d'une unité centrale de traitement d'informations de pilotage des actionneurs, désignée par la référence générale 1 sur cette figure.

Dans cette unité centrale, sont intégrées différentes entités logicielles qui sont réparties par groupes hiérarchiques.

C'est ainsi par exemple que cette unité centrale de traitement d'informations comporte un groupe d'entités logicielles de véhicule désigné par la référence générale 2 recevant en entrée une consigne de pilotage du moteur, telle que la consigne 3 et différentes informations relatives aux contraintes de fonctionnement du véhicule désignées par la référence générale 4, pour délivrer une consigne de couple désignée par la référence générale 5.

Ces entités spécifient les caractéristiques globales du véhicule, gèrent toutes les stratégies de conduite (typage de conduite, agrément de conduite, etc.) et forment une interface entre le contrôle moteur et les autres éléments de commande du véhicule (boîte de vitesses pilotée, anti-patinage, etc.).

L'unité centrale comporte également un groupe d'entités logicielles de moteur désigné par la référence générale 6, recevant en entrée la consigne de couple 5 et différentes informations relatives aux conditions de fonctionnement du moteur désignées par la référence générale 7, pour délivrer une consigne de travail instantané pour chaque cylindre du moteur, cette consigne de travail étant désignée par la référence générale 8.

Ces entités englobent les contraintes de consommation et de polluants dictées par l'environnement externe.

Elles reçoivent donc des entités logicielles de véhicule, une consigne en couple globale et assure la répartition de ce couple sur les différents cylindres du moteur en communiquant aux entités logicielles associées à ceux-ci un travail instantané.

Le choix du couple polluants/consommation est déterminé à ce niveau de commande par un algorithme d'optimisation.

Ces deux groupes d'entités logicielles sont donc communs pour les différents cylindres du moteur et délivrent pour chaque cylindre par exemple X du moteur, une consigne de travail instantané.

Cette consigne est donc appliquée pour chaque cylindre du moteur, à des entités logicielles de combustion désignées par la référence générale 9 sur cette figure, associées à chaque cylindre du moteur et recevant en entrée la consigne de travail instantané correspondante et différentes informations relatives au fonctionnement du cylindre, désignées par la référence générale 10, pour délivrer en sortie des informations de commande des actionneurs associés au cylindre correspondant, ces informations étant désignées par la référence générale 11 sur cette figure.

Ces conditions de fonctionnement concernent la consommation et les polluants et les informations de commande des actionneurs délivrées par ce groupe d'entités logicielles concernent le remplissage, la masse de gaz brûlé, la richesse, la stratégie d'activation des soupapes et la commande d'avance à l'allumage pour le cylindre correspondant.

Ces différentes informations sont donc entrées dans un groupe d'entités logicielles d'énergie désigné par la référence générale 12 sur cette figure qui assure l'apport énergétique au moteur et regroupe la commande des soupapes suivant l'ensemble des consignes de remplissage, de masse de gaz brûlé, de richesse, etc.., en délivrant des informations de contrôle des actionneurs désignées par la référence générale 13 à des entités logicielles de commande des actionneurs désignées par la référence générale 14 sur cette figure.

Ces entités concernent la commande de bas niveau pour les actionneurs. Ce module est traditionnel pour les organes classiques, à savoir les injecteurs, l'allumage, etc., mais gère le fonctionnement des soupapes associées aux actionneurs électromagnétiques. Ces soupapes peuvent être pilotées en boucle ouverte ou autre.

Les fonctions classiques de contrôle du moteur peuvent alors être divisées au sein de la commande hiérarchisée et on peut décrire les fonctions qui agissent sur l'ensemble, moteur + véhicule.

De façon générale, l'objectif de celles-ci est de réaliser la meilleure intégration possible du moteur au sein du véhicule.

Elles délivrent une sortie homogène à un couple venant piloter le niveau moteur. Ces fonctions de commande peuvent être par exemple transférables vers d'autres architectures de moteur.

Les fonctions au niveau de cette commande de véhicule sont par exemple :
1) la conversion position pédale/couple : la pédale d'accélérateur du véhicule ne pilote pas directement un actionneur comme dans le cas d'un moteur classique. Cette information de position de la pédale est convertie en couple en tenant compte du régime et du couple maximum possible,
2) la régulation de ralenti : la loi de commande délivre suivant l'information du régime, une sortie représentant un écart de couple ΔC que le moteur devra appliquer instantanément. Un moteur à soupapes électromagnétiques permet de gérer des variations rapides de couple via la commande en remplissage, ce qui représente un gain très net en terme de consommation au ralenti,
3) l'agrément de conduite/confort : ces commandes sont typiquement des fonctions d'intégration du moteur au sein du véhicule. Suivant la dynamique de la chaîne de transmission, elles fournissent un écart de couple à appliquer instantanément, et
4) la régulation de vitesse : il s'agit d'une régulation relativement simple de vitesse qui communique directement avec les modules de conversion de couple et d'agrément de conduite.

Les fonctions au niveau du module de commande du moteur sont, en fonction des consignes de couple C et d'écart de coupe ΔC provenant de la couche supérieure, de fixer le couple cycle à cycle pour chaque cylindre. Les contraintes globales sur les émissions de polluants et la consommation sont gérées à ce niveau de la commande.

Cette commande regroupe donc toutes les fonctions du niveau moteur, à savoir :
1) le pilotage en air frais entrant dans chaque cylindre : cette commande a pour rôle de convertir une consigne en remplissage en commande d'actionneur, c'est-à-dire en angles d'ouverture et de fermeture pour chaque soupape. Plusieurs couples angle d'ouverture/angle de fermeture sont possibles pour satisfaire un remplissage de consigne.
   Afin de déterminer un couple unique d'angle pour chaque soupape, la commande en air frais est associée à la commande en gaz brûlé qui pilote le taux de gaz résiduel dans chaque cylindre.
   Cette commande offre alors de nombreuses possibilités, un remplissage de consigne peut être obtenu suivant le cas par l'activation d'au moins deux soupapes, l'une à l'admission et l'autre à l'échappement ou pour un moteur à seize soupapes, au maximum quatre soupapes. La détermination du nombre de soupapes actives est réalisée à partir d'un compromis performance/consommation électrique pour chaque actionneur. Le fait de désactiver des soupapes permet d'augmenter le remplissage suivant le domaine de fonctionnement en régime et charge.
2) la commande d'injection : elle est déduite directement de la commande en remplissage et respecte le ratio air/carburant afin d'avoir le suivi de richesse optimal dans toutes les conditions de fonctionnement. Cette commande tient uniquement compte d'un modèle de dépôt de carburant sur les parois, ce modèle étant appelé (τ,X).
3) la commande en avance à l'allumage : elle s'appuie comme la commande en injection sur la commande en remplissage. L'avance à l'allumage est calculée pour chaque consigne en remplissage, masse de gaz brûlé et régime moteur. Ainsi, elle est optimisée pour chaque point de fonctionnement. De plus, de par la désactivation des soupapes, la turbulence au sein du cylindre est favorisée en améliorant ainsi d'autant le rendement de la combustion, et
4) la gestion/optimisation en polluants : elle regroupe les fonctions de stratégies inclues dans le module de contrôle de moteur. Elle fixe la consigne en remplissage et masse de gaz brûlé, pour chaque cylindre et donc directement la stratégie de désactivation des soupapes et des cylindres. Le choix de désactivation des cylindres est fait suivant le bilan énergétique global du moteur ou lorsque la demande en couple ne peut être satisfaite que par l'extinction d'un ou de plusieurs cylindres.

La répartition de couple que doit produire chaque cylindre est fixée par l'envoi de trois consignes qui sont remplissage, masse de gaz brûlé, avance à l'allumage. La prise en compte des polluants est directement gérée à ce niveau de la commande. C'est elle qui fixe les consignes pour les couches inférieures.

Il va de soi bien entendu que d'autres modes de réalisation encore d'un tel système peuvent être envisagés.

## Revendications

1. Système de commande d'actionneurs électriques de soupapes d'un moteur à distribution variable notamment de véhicule automobile, **caractérisé en ce qu'**il comporte une unité centrale de traitement d'informations (1) de pilotage des actionneurs, dans laquelle sont intégrées des entités logicielles réparties par groupes :
a) d'entités logicielles de véhicule (2) recevant en entrée une consigne (3) de pilotage du moteur et différentes informations (4) relatives aux contraintes de fonctionnement du véhicule pour délivrer une consigne de couple (5),
b) d'entités logicielles de moteur (6) recevant en entrée la consigne de couple (5) et différentes informations (7) relatives aux conditions de fonctionnement du moteur pour délivrer une consigne de travail instantané (8) pour chaque cylindre du moteur,
c) d'entités logicielles de combustion (9), pour chaque cylindre du moteur, recevant en entrée la consigne de travail instantané (8) et différentes informations (10) relatives au fonctionnement du cylindre pour délivrer en sortie des informations de commande (11) des actionneurs associés au cylindre correspondant,
d) d'entités logicielles d'énergie (12) recevant en entrée les informations de commande des actionneurs pour délivrer des informations de contrôle (13) des actionneurs, et
e) d'entités logicielles de commande (14) des actionneurs recevant en entrée les informations de contrôle correspondantes pour contrôler le fonctionnement de ceux-ci.

## Claims

1. A system for operating electric valve actuators of a variable distribution engine in particular of a motor vehicle, **characterised in that** it comprises a central data-processing unit (1) for controlling the actuators, in which unit software entities, subdivided into the following groups, are integrated:
a) vehicle software entities (2) receiving at the input a set value (3) for controlling the engine, and various data (4) relating to the constraints on the vehicle operation for yielding a set value (5) for the torque,
b) engine software entities (6) receiving at the input the set value (5) for the torque and various data (7) relating to the conditions for operation of the engine, for delivering a set value for the instantaneous work (8) for each cylinder of the engine,
c) combustion software entities (9), for each cylinder of the engine, receiving at the input the instantaneous-work set value (8) and various data (10) relating to the operation of the cylinder for outputting data (11) for operating the actuators associated with the corresponding cylinder,
d) energy software entities (12) receiving at the input the actuator-operation data for delivering data (13) for monitoring the actuators, and
e) software entities (14) for operating the actuators, receiving at the input the corresponding monitoring data for monitoring the operation of the latter.

## Patentansprüche

1. Steuerungssystem für elektrische Ventilaktoren eines Motors mit variabler Übertragung insbesondere für ein Kraftfahrzeug, **dadurch gekennzeichnet, dass** es eine Zentraleinheit zur Informationsverarbeitung (1) umfasst, welche die Aktoren steuert und in welcher Programmeinheiten integriert sind, die sich auf Gruppen verteilen:
a) Fahrzeugprogrammeinheiten (2), welche eingangs einen Befehl (3) für die Motorsteuerung und verschiedene Informationen (4), die sich auf die Funktionseinschränkungen des Fahrzeugs beziehen, erhalten und dann einen Schaltbefehl (5) geben,
b) Motorprogrammeinheiten (6), welche eingangs den Schaltbefehl (5) und verschiedene Informationen (7), die sich auf die Funktionsbedingungen des Motors beziehen, erhalten und dann einen Befehl zur unverzüglichen Leistung (8) für jeden Motorzylinder geben,
c) Verbrennungsprogrammeinheiten (9) für jeden Zylindermotor, welche eingangs den Befehl zur unverzüglichen Leistung (8) und verschiedene Informationen (10), die sich auf die Funktionsweise des Zylinders beziehen, erhalten und dann ausgangs Befehlsinformationen (11) für die zum entsprechenden Zylinder zugehörigen Aktoren geben,
d) Energieprogrammeinheiten (12), welche eingangs die Befehlsinformationen für die Aktoren erhalten, und dann Kontrollinformationen für die Aktoren (13) geben und
e) Aktorensteuerungsprogrammeinheiten (14), welche eingangs die zugehörigen Kontrollinformationen erhalten und dann die Funktion der Aktoren kontrollieren.
